# FASCICULE DE BREVET EUROPEEN

(11) **EP 2 413 119 B1**
(45) Date de publication et mention de la délivrance du brevet: **03.05.2017**
(21) Numéro de dépôt: 11174921.4
(22) Date de dépôt: 21.07.2011
(51) Int. Cl.: G01K 11/12, A47J 36/02

(54) **Article chauffant comportant un indicateur thermique coloré à visibilité et précision améliorées**
Heizgerät, das mit einem farbigen Wärmeindikator mit verbesserter Sichtbarkeit und Genauigkeit ausgestattet ist
Heating article including a coloured thermal indicator with improved visibility and precision

(30) Priorité: 26.07.2010 FR 1056091
(43) Date de publication de la demande: 01.02.2012
(73) Titulaire: SEB S.A., 69130 Ecully (FR)
(72) Inventeur: Le Bris, Stéphanie, 73000 Chambéry (FR); Voisin, Laurent, 74150 Sales (FR); Perillon, Jean-Luc, 26130 Saint Paul Trois Châteaux (FR)
(74) Mandataire: Novagraaf Technologies

(56) Documents cités:
- EP-A1- 0 287 336
- EP-A1- 1 405 890
- FR-A1- 2 858 768
- US-A1- 2006 001 726

## Description

La présente invention concerne de manière générale des articles chauffants comportant un indicateur thermique coloré réversible à visibilité et précision améliorée. Il s'agit notamment d'articles tels que des poêles, des casseroles, des sauteuses, des grilles de barbecues, des semelles de fers à repasser, ou encore des plaques de lisseurs à cheveux.

En effet, il est particulièrement intéressant pour un utilisateur de tels articles de visualiser l'évolution de la température d'un article en cours d'utilisation lorsque ce dernier est soumis à un chauffage. Dans le cas d'un article culinaire, un bon contrôle de la température lors de la cuisson des aliments est nécessaire pour des raisons sanitaires et gustatives (par exemple pour saisir un steak sur un grill ou dans une poêle), et pour limiter les surchauffes ponctuelles fragilisant le revêtement de l'article culinaire. Dans le cas d'un lisseur à cheveux, cela présente également un intérêt pour l'utilisateur de connaître la température d'utilisation optimale du lisseur : dans ce cas particulier, il s'agit de la température de rupture des ponts disulfures du cheveu. Dans le cas d'un fer à repasser, cela peut présenter un intérêt pour éviter par exemple tout risque de brûlure avec la semelle chaude (notamment lorsque le fer a atteint sa température de fonctionnement et que le voyant lumineux du thermostat s'éteint).

Dans ce domaine, on connaît déjà des récipients de cuisson comportant des indicateurs de température permettant de connaître la température de la surface intérieure des récipients. Ces indicateurs comprennent généralement un capteur de température intégré dans le fond du récipient de cuisson et relié par des conducteurs à un boîtier électronique comportant un écran d'affichage de la température mesurée par le capteur. Grâce à de tels moyens, l'utilisateur est constamment informé de la température atteinte par la surface de cuisson du récipient, de sorte qu'il est capable de détecter à quel moment précis, la surface de cuisson a atteint une température suffisante pour bien " saisir " une viande. En outre, le fait que la température de la surface de cuisson du récipient soit visualisée permet également d'avertir l'utilisateur que l'article est chaud et présente un danger de brûlure pour les personnes.

De tels indicateurs de température présentent toutefois les inconvénients d'être compliqués et de poser des problèmes d'isolation électrique, notamment par rapport à l'eau de lavage.

Dans certaines autres réalisations connues d'articles chauffants, l'indicateur de température est constitué d'une substance thermochrome organique susceptible de changer brusquement de couleur à une certaine température. Il s'agit en particulier d'un pigment thermochrome micro-encapsulé commercialisé sous la dénomination commerciale ChromaZone®. Ce pigment passe d'un état coloré à un état incolore lorsque la température augmente, en raison d'un changement d'état physique (passage de l'état solide à liquide du solvant à l'intérieur de la microcapsule). Cependant, ce pigment thermochrome utilisé à titre d'indicateur de température présente l'inconvénient de n'être pas placé directement sur la surface chauffante de l'article. Ainsi par exemple, dans le cas d'un article culinaire, le pigment thermochrome est placé sur l'embase de la poignée, sur le bord extérieur de l'article, ou encore sur l'aplat du bord, de sorte que le changement de couleur du composé chimique ne constitue alors pas une indication réelle de la température atteinte par la surface de cuisson. Comme ce type de composés thermochromes n'est pas résistant à des températures supérieures à 200°C, il ne peut être positionné directement sur la surface de cuisson, dont la température atteint au moins 200°C à chaque utilisation. Si c'était le cas, un tel composé se dégraderait rapidement et de manière irréversible.

Par substance, mélange ou composition thermochrome, on entend au sens de la présente invention, une substance, un mélange ou une composition qui change de couleur en fonction de la température de manière réversible.

On connaît par ailleurs le brevet français FR 1 388029 appartenant à la Demanderesse, qui décrit un ustensile de cuisson muni d'un indicateur thermique constitué d'un corps thermosensible changeant de couleur en fonction de la température de manière réversible, cet indicateur thermique étant formulé dans un revêtement antiadhésif, notamment constitué de polytétrafluoroéthylène. Un pigment thermostable peut également être incorporé à l'ustensile culinaire à titre de témoin pour permettre une appréciation du changement relatif de couleur de l'indicateur thermosensible, et donc du changement de température.

Par pigment thermostable, on entend au sens de la présente invention, un composé minéral ou organique, qui présente un très faible changement de teinte lorsqu'il est soumis à une élévation de température dans un domaine de température donné.

Toutefois, la simple association d'un pigment thermostable et d'un pigment thermosensible ne permet pas de distinguer de façon nette le changement de température.

Pour remédier à ces problèmes, la Demanderesse a développé un article chauffant comportant une surface recouverte par un revêtement de base constitué de résine thermostable qui résiste à au moins 200°C et sur lequel est appliqué un décor à base de résine thermostable résistant à au moins 200°C. Ce décor comprend au moins deux motifs, l'un renfermant un composé chimique thermochrome qui s'assombrit avec la montée en température, et l'autre renfermant un composé chimique également thermochrome, mais qui s'éclaircit avec la montée en température. Cet article fait l'objet du brevet européen EP 1121576.

L'utilisation simultanée de ces composés chimiques thermochromes dans des zones contigües permet effectivement d'améliorer la perception visuelle du changement de température de la surface de cuisson de l'article chauffant. Toutefois, cette perception est difficile à saisir : d'une part parce que les deux rouges ont des valeurs chromatiques proches à température ambiante, et d'autre part parce que la confusion de couleur se produit dans une zone d'amplitude thermique d'au moins 50°C. Il s'ensuit que la précision de la mesure et le confort de la lecture ne sont pas faciles, en particulier pour un public sans formation particulière. De ce fait, les utilisateurs ont alors tendance à négliger l'information apportée par cet indicateur.

Il n'en demeure pas moins qu'un bon contrôle de la température lors de la cuisson des aliments est nécessaire pour des raisons sanitaires et gustatives, et pour limiter les surchauffes ponctuelles fragilisant le revêtement de l'article culinaire.

Par ailleurs, on connaît également les semi-conducteurs (SC), dont les propriétés laissent envisager un changement de coloration progressif lors d'une augmentation de la température suivant la séquence blanc→jaune→orange→rouge→noir.

Par semi-conducteur (SC) thermochrome, on entend donc au sens de la présente invention, un composé semi-conducteur qui présente un changement de coloration lors d'une élévation de température. Le caractère thermochrome progressif et parfaitement réversible de ces composés semi-conducteurs est lié à la diminution la largeur de la bande interdite du semi-conducteur à cause de la dilatation du matériau.

Dans les domaines d'applications envisagées pour la présente invention, un article chauffant du type article culinaire ou fer à repasser est typiquement utilisé dans une gamme de températures comprise entre 100°C et 300°C. Or, dans cette gamme de températures, les changements de coloration des SC restent limités et peu marqués et se limitent aux évolutions suivantes : de jaune pâle à jaune vif (Bi₂O₃), de jaune-orangé à rouge-orange (V₂O₅), de rouge-orangé à rouge très foncé (Fe₂O₃), etc. On voit donc que, même s'il est possible d'atteindre des couleurs différentes du rouge, la perception de l'effet thermochrome reste difficile et peu précise.

Pour remédier à ces problèmes de perception de l'effet thermochrome des semi-conducteurs, en particulier dans des gammes de températures (comprises entre 100°C et 300°C) qui sont typiquement les gammes de températures d'utilisation d'articles chauffants tels que des articles culinaires ou des fers à repasser, il est connu d'associer un ou plusieurs SC thermochromes à un ou plusieurs SC thermostables.

Cette association de semi-conducteurs thermochromes et de semi-conducteurs thermostables a pour principal effet que la gamme des teintes accessibles est ainsi particulièrement étendue. Mais de plus, la perception du changement de teinte est aussi augmentée : le mélange d'un semi-conducteur thermochrome qui virera de blanc cassé à jaune vif pourra alors, si on l'associe avec un pigment bleu, virer du bleu-cyan au vert-citron. Comme la sensibilité maximale de l'oeil humain est centrée sur les longueurs d'onde correspondant au vert, ce mélange ne présentera pas forcément des changements de paramètre colorimétrique plus élevé que le thermochrome seul, mais l'oeil humain percevra mieux ce changement.

Le brevet européen EP 0 287 336 et la demande de brevet européen EP 1 405 890 divulguent l'élaboration de mélanges constitués d'un ou plusieurs semi-conducteurs thermochromes et d'un ou plusieurs pigments stables afin d'obtenir des compositions complexes aux propriétés thermochromes accrues. Plus particulièrement, dans le brevet EP 1 405 890, on associe l'oxyde de bismuth Bi₂O₃ (thermochrome) avec CoAl₂O₄ (thermostable, de couleur bleue), dans un rapport 15:1, les pigments étant liés par un silicate de potassium. Le revêtement contenant ce mélange est bleu à température ambiante et devient orange à 400°C.

Certes, ces mélanges de semi-conducteurs thermochromes avec des pigments thermostables ont l'avantage de conférer aux revêtements qui les contiennent un thermochromisme réversible à visibilité et précision améliorée.

Cependant, certains pigments semi-conducteurs thermochromes présentent l'inconvénient majeur de n'être pas compatibles, lors d'une utilisation sur une surface chauffée, avec des huiles ou des graisses : ils sont dits liposensibles à chaud. En effet, par exemple les oxydes métalliques semi-conducteurs sont facilement réductibles à chaud en présence d'huile ou de graisse et les composés formés après cette réaction de réduction ne sont plus thermochromes.

Il est donc nécessaire de protéger les pigments semi-conducteurs thermochromes liposensibles à chaud, de manière à les rendre inertes vis-à-vis d'une huile ou d'une graisse susceptible de réduire les SC thermochromes.

Il est connu de l'homme de l'art, spécialiste des compositions à base de pigments, de protéger les pigments en les enrobant dans une coque (ou enveloppe) minérale. Une telle technique est couramment utilisée dans de nombreux domaines, tels que par exemple les cosmétiques ou les peintures. Ainsi, le brevet français FR 2 858 768, décrit une formulation de soin pour cheveux, comportant à titre de pigments des particules métalliques enrobées dans une coque d'oxyde (particules d'argent enrobées de SiO₂). Ces pigments confèrent aux cheveux une brillance élevée sur une longue durée. Dans les peintures, on diminue l'effet photocatalytique de l'oxyde de titane par enrobage à l'aide d'une coque minérale en silice et on améliore la résistance aux acides des pigments Bleu Ultramarine (pigments minéraux artificiels obtenus en chauffant de la soude, de l'argile et du soufre).

Enfin, dans ce domaine également, il est possible de créer des pigments à effet (métallisé, perlé, etc.) avec une durabilité améliorée, en enrobant avec une coque minérale à base de silice, d'oxyde de cérium ou de fer par exemple.

Par ailleurs, il est également connu de l'homme de l'art que les protections apportées par un enrobage à base de silice à des pigments jaunes commerciaux à base d'oxyde mixte de bismuth et de vanadium BiVO₄ (en particulier les pigments commercialisés sous les dénominations commerciales Sicopal Yellow K1160FG® de BASF, Lysopac Jaune 6613P® de CAPPELLE, et Vanadur Plus 9010® de HEUBACH, etc.) permettent une meilleure stabilité de la couleur en température et rendent possible leur utilisation dans les plastiques extrudés. Les procédés de fabrication de ces pigments protégés sont décrits dans les brevets US 4,063,956 de la Société Du Pont, US 4,851,049 de la Société BASF, US 5,851,587 de la Société Bayer AG, et EP 1086994 de la Société Cappelle. Les enrobages des pigments, qui sont des enrobages denses et continus contenant notamment de la silice, sont déposés par précipitation. Certes, les pigments jaunes à l'intérieur de l'enrobage présentent un caractère thermochrome allant du jaune vif à température ambiante à l'orangé-rouge à 300°C, mais ils ne peuvent pas être utilisés dans un mélange alliant un thermochrome à un thermostable car leur couleur est tellement vive et intense qu'elle neutralise la couleur de tout autre pigment additionné.

Enfin, le brevet américain US 2,285,366 décrit différentes voies de synthèses d'une coque de silice impénétrable autour de particules de toutes sortes de compositions. L'enrobage peut être fait par condensation d'acide silicique (« silice active ») à partir de silicate de soude par précipitation, ou à partir de méthyl-orthosilicate (ou TMOS) par voie sol-gel, ou encore à partir de SiCl₄ hydrolysé. Ces techniques d'enrobage par précipitation ou par voie sol-gel sont toujours largement utilisées car elles permettent de créer des coques (ou enveloppes) de nature très variées : oxydes métalliques (des métaux Al, Si, Ti, B, Mg, Sn, Mn, Hf, Th, Nb, Ta, Zn, Mo, Ba, Sr, Ni, Sb), phosphate ou pyrophosphate de Zn, Al, Mg, Ca, Bi, Fe, Cr, etc.

Toutefois, rien n'est dit dans l'ensemble de ces documents concernant une protection transparente, présentant des caractéristiques spécifiques pour résister thermiquement à des températures pouvant être très élevées en présence d'huile ou de graisse.

Or, pour jouer correctement son rôle dans les applications visées, notamment comme indicateur de température disposé sur la surface destinée à être chauffée d'articles chauffants (par exemple d'articles de cuisson), la demanderesse a découvert que les pigments semi-conducteurs thermochromes liposensibles à chaud doivent être protégés par un enveloppe et que celle-ci doit être transparente et continue avec une épaisseur d'au moins 5 nm pour rendre le pigment enrobé étanche à l'huile jusqu'à une température d'au moins 450°C. De plus, la granulométrie des pigments thermochromes ainsi enrobés devra être suffisamment fine pour se disperser aisément en formulation et permettre un bon pouvoir couvrant du revêtement obtenu.

Par article chauffant, on entend, au sens de la présente invention, un article qui possède son propre système de chauffage, ou qui est chauffé par un système extérieur et qui est apte à transmettre l'énergie calorifique apportée par ce système à un matériau ou objet tiers au contact dudit article.

Par pouvoir couvrant, on entend, au sens de la présente invention, l'aptitude d'un revêtement à masquer toute variation de couleur ou de teinte de la surface du support sur lequel est appliqué ce revêtement, et ce, avec l'épaisseur la plus faible possible.

Toutes ces contraintes rendent l'étape de protection assez délicate et nécessitent notamment une activation initiale de la surface des particules (qui peut être soit un traitement thermique, soit une étape de broyage, soit les deux), présentant une taille suffisamment faible, une épaisseur et une homogénéité d'enveloppe maitrisées, ainsi qu'une densification de l'enveloppe suffisante.

L'invention consiste donc à mettre en oeuvre cette protection de manière efficace sur un pigment semi-conducteur thermochrome liposensible à chaud, de manière à les rendre inertes vis-à-vis d'une huile à température élevée (c'est-à-dire pour éviter une réduction de ces semi-conducteurs par l'huile). Dans le cas d'un pigment pulvérulent, il faudra également s'assurer que l'on conserve une granulométrie suffisamment fine, pour assurer une bonne couverture colorimétrique du revêtement dans lequel ces pigments sont formulés.

Plus particulièrement, la présente invention a pour objet un article chauffant comportant :
▪ un support présentant une surface destinée à être chauffée dans un intervalle de température T₁ d'utilisation compris entre 50°C et 400°C, et
▪ un décor appliqué sur au moins une partie de ladite surface, ledit décor se présentant sous forme d'une couche de revêtement à au moins un motif, qui comporte une composition pigmentaire thermochrome avec au moins un pigment semi-conducteur thermochrome liposensible à chaud.

Selon l'invention, la composition pigmentaire thermochrome comprend :
∘ au moins un pigment thermostable, et
∘ des grains pigmentaires composites à structure coeur-enveloppe (communément désignée en anglais par l'expression « *core-shell* »), dont le diamètre est compris entre 20 nm et 25000 nm et qui comprennent chacun :
   ▪ un coeur comprenant le pigment semi-conducteur thermochrome liposensible à chaud, et
   ▪ une enveloppe solide, transparente et continue, qui est constituée par un matériau minéral ou un matériau hybride organo-minéral, et
cette composition pigmentaire thermochrome présentant un changement de couleur réversible dans une zone de virage thermique d'amplitude d'au plus 40°C à l'intérieur de l'intervalle de variation de la température T₁ d'utilisation .

Les grains pigmentaires composites conformes à l'invention présentent la propriété d'être inertes vis à vis d'une huile jusqu'à une température de l'ordre 450°C, et plus particulièrement vis-à-vis d'huiles de type triglycérides d'acides gras d'origine végétale, animale ou synthétique, et par extension vis-à-vis d'esters d'acides gras (mono, di ou pluri esters d'acides gras avec des groupe alkyles dont l'un au moins est en Cₙ avec n égal ou supérieur à 8.

Le pigment semi-conducteur thermochrome liposensible à chaud peut se présenter sous forme liquide ou sous forme solide. De préférence, le pigment semi-conducteur thermochrome liposensible à chaud se présente à l'état divisé sous forme de particules solides, chaque grain pigmentaire composite comprenant au moins une particule de pigment.

La composition pigmentaire thermochrome peut en outre comprendre un ou plusieurs pigments thermochromes non enrobés s'ils ne sont pas liposensibles à chaud.

De manière avantageuse, l'enveloppe des grains pigmentaires composites présente une épaisseur comprise entre 5 nm et 100 nm. En effet, au dessous de 5 nm, l'épaisseur de l'enveloppe ne permet pas de couvrir la totalité des irrégularités de surface des particules de pigment. Au-delà de 100 nm, elle est trop épaisse et risque de réduire l'intensité colorimétrique du pigment thermochrome.

De préférence, l'enveloppe des grains composites est comprise entre 20 à 50 nm, et mieux, est de l'ordre de 30 nm : les meilleurs résultats sont obtenus avec ces valeurs préférentielles en termes de résistance à l'huile à chaud.

L'article chauffant selon l'invention présente l'avantage majeur d'être ainsi doté d'un indicateur thermique coloré réversible à visibilité et précision améliorée, tout en étant particulièrement résistant aux hautes températures. En effet, dans l'article chauffant selon l'invention, l'indicateur de température est de ce fait constitué par la couche de décor incorporant les particules composites pigmentaires à structure coeur-enveloppe à base de pigments inorganiques dans le coeur et d'une enveloppe minérale ou hybride organo-minérale. Les grains pigmentaires composites sont nettement plus résistants en température que les composés thermochromes qu'elles contiennent dans leur coeur.

L'enveloppe des grains composites peut être minérale ou organo-minérale. Elle est typiquement synthétisée par voie sol-gel à partir d'un moins un polyacoxylate métallique.

Cette enveloppe est de préférence minérale. Par exemple, elle peut être avantageusement constituée d'un ou plusieurs oxydes métalliques choisis parmi les oxydes des éléments suivants Al, Si, Ti, B, Mg, Fe, Zr, Ce, Sn, Mn, Hf, Th, Nb, Ta, Zn, Mo, Ba, Sr, Ni, Sb. L'enveloppe minérale d'une particule composite peut également être choisie parmi les phosphates ou pyrophosphates des éléments suivants : Zn, Al, Mg, Ca, Bi, Fe, Cr, etc....

De préférence, le coeur des grains pigmentaires composites comprend, outre le pigment thermochrome, au moins un pigment thermostable sous forme liquide ou à l'état divisé sous forme de particules solides.

Par ailleurs, le décor peut ne recouvrir qu'une petite surface de la surface destinée à être chauffée, mais il peut aussi bien en recouvrir l'intégralité. Le décor peut être discontinu ou continu (aplat).

Le décor peut être appliqué directement sur la surface du support destinée à être chauffée (et dont l'utilisateur cherche à estimer la température en cours d'utilisation). En effet, la protection des pigments semi-conducteurs thermochromes liposensibles à chaud par une coque (ou enveloppe) transparente et continue d'épaisseur appropriée permet de les rendre inertes vis-à-vis d'huiles ou de graisses, et en particulier lorsque celles-ci sont chauffées jusqu'à des températures de l'ordre de 300°C-450°C, sans qu'un vieillissement prématuré de l'indicateur ne soit observé.

Toutefois, il peut être avantageux que la surface destinée à être chauffée soit recouverte au moins partiellement par un revêtement de base continu ou discontinu, sur lequel est appliqué au moins en partie la couche de décor, le revêtement de base comprenant au moins un liant thermostable résistant à au moins 200°C.

Par ailleurs, la couche de décor, ainsi que la surface du support destinée à être chauffée et/ou le revêtement de base le cas échéant peuvent avantageusement être recouverts d'une couche continue de finition continue et transparente, qui comprend au moins un liant thermostable résistant à au moins 200°C. Cette couche de finition laisse à l'utilisateur une visibilité parfaite du décor tout en le protégeant de l'abrasion, tout en lui confèrent des propriétés anti-adhérentes le cas échéant (revêtement de finition à base de résine fluorocarbonée par exemple).

Avantageusement, si l'article chauffant selon l'invention comporte trois couches successives recouvrant la surface du substrat destinée à être chauffée, le liant thermostable de la couche de finition et celui de la couche de revêtement de base sont identiques. De préférence, le revêtement de base, le décor et la couche de finition sont cuits simultanément, ce qui permet un frittage simultané des liants thermostables de chaque couche et favorise donc la cohésion des particules composites du décor entre elles.

Selon un premier mode de réalisation particulièrement avantageux de la présente invention, le décor peut comprendre, outre les pigments composites, un liant thermostable à au moins 300°C, qui peut être avantageusement choisi parmi les résines fluorocarbonées, seules ou en mélange avec d'autres résines fluorocarbonées, les résines polyester-silicones et les résines silicones, et les matériaux sol-gel.

Dans ce premier mode de réalisation avec à titre de liant un matériau sol-gel, ce dernier pourra avantageusement comprendre une matrice d'au moins un polyalcoxylate métallique et au moins 5% en poids par rapport au poids total du revêtement d'au moins un oxyde métallique colloïdal dispersé dans ladite matrice.

Dans ce cas, avec un tel liant, l'enveloppe des particules composites est de préférence une enveloppe en silice, qui forme une barrière isolant le pigment de l'action potentielle d'une huile ou d'une graisse à chaud. Cette enveloppe peut être réalisée comme suit (conformément au procédé de l'invention décrit plus en détail dans la suite du texte) : après activation de la surface du pigment et broyage pour obtenir une granulométrie satisfaisante, une enveloppe (ou coque) de silice est formée par voie sol-gel à partir de précurseurs alcoxysilanes en conditions basiques. Cette enveloppe est ensuite densifiée par traitement thermique de manière à la rendre totalement imperméables aux graisses.

Dans ce premier mode de réalisation, il est également possible d'utiliser à titre de liant thermostable une résine fluorocarbonée ou un mélange de résines fluorocarbonées, seul(e) ou en mélange avec d'autres résines thermostables.

Cette résine fluorocarbonée peut être du polytétrafluoroéthylène (PTFE), du copolymère de tétrafluoroéthylène et de perfluoropropylvinyléther (PFA) ou du copolymère de tétrafluoroéthylène et d'hexafluoropropylène (FEP) ou un mélange de ces résines fluorocarbonées.

Les autres résines thermostables résistant à au moins 200°C peuvent être un polyamide imide (PAI), un sulfone de polyéthylène (PES), un sulfure de polyphénylène (PPS), une polyéthercétone (PEK), une polyétheréthercétone (PEEK) ou une silicone.

Enfin, toujours dans ce premier mode de réalisation (avec liant thermostable), il est possible, d'utiliser à titre de liant thermostable, une résine silicone ou une résine polyester-silicone.

Dans ce premier mode de réalisation (couche de décor avec liant thermostable) et si l'article chauffant selon l'invention comporte au moins deux couches successives recouvrant la surface du substrat destinée à être chauffée en particulier (soit un revêtement de base recouvert d'un décor, soit le décor recouvert de la couche de finition, soit encore le revêtement de base recouvert du décor, lui-même recouvert d'une couche de finition), il est nécessaire que ces différentes couches (donc leurs liants thermostables respectifs) soient compatibles entre elles. Mais il n'est pas indispensable que les liants soient identiques. Ainsi, il est possible d'avoir un liant de type résine silicone dans la couche de décor, tandis que le liant du revêtement de base et/ou la couche de finition est un matériau sol-gel.

Selon un deuxième mode de réalisation particulièrement avantageux de la présente invention, le décor est exempt de liant thermostable.

Pour certains types d'applications, l'ajout d'additifs de formulation peut être nécessaire pour adapter les propriétés de la composition au procédé d'application. Ainsi, pour des applications par sérigraphie ou tampographie, la présence d'au moins un épaississant est nécessaire dans la composition de la couche du décor, cet épaississant peut être soit de nature organique (base uréthane, base acrylique, base cellulose...) ou inorganique (silice pyrogénée, Laponite®...).

D'autres modes d'applications du décor sont encore possibles, par exemple par pulvérisation, au rideau, au rouleau, au trempé, au pinceau, etc.

Pour ce qui concerne plus particulièrement les grains composites pigmentaires à structure coeur-enveloppe, on utilise, à titre de pigment(s) thermochrome(s) qui en constituent le coeur, des oxydes métalliques semi-conducteurs, qui sont de préférence choisis parmi les semi-conducteurs suivants :
- V₂O₅, qui présente à température ambiante une couleur jaune orangée,
- Bi₂O₃, qui présente à température ambiante une couleur blanc cassé, très légèrement jaune,
- BiVO₄, qui est jaune à température ambiante,
- WO₃, CeO₂, In₂O₃ très semblables à Bi₂O₃, et
- Fe₂O₃, qui peut-être de orangé à brun à température ambiante, et
- le SC pyrochlore Y_{1,84}Ca_{0,16}Ti_{1,84}V_{0,16}O_{1,84} qui est jaune-orangé à température ambiante.

La composition pigmentaire thermochrome du décor comprend, outre les grains pigmentaires composites au moins un pigment thermostable.

Par rapport à un indicateur de température constitué d'un pigment thermochrome utilisé seul tel que décrit dans le brevet EP 1121576, l'utilisation pigments thermostables associés aux grains pigmentaires composites permet d'atteindre une gamme de teintes particulièrement étendue et d'augmenter la perception de ce changement de teinte. L'indicateur de température de l'article chauffant selon l'invention est alors plus visible (au sens de perceptible par un utilisateur en cours d'utilisation), plus lisible (c'est à dire plus facile à comprendre par le consommateur) et plus précis que celui décrit dans le brevet EP 1121576.

Ainsi par exemple, la composition pigmentaire thermochrome peut comprendre un mélange d'au moins un pigment thermostable et d'au moins une particule composite pigmentaire enrobant un pigment thermochrome, ce mélange pouvant être avantageusement choisi parmi les mélanges suivants :
▪ Bi₂O₃ enrobé + CO₃(PO₄)₂,
▪ Bi₂O₃ enrobé + LiCoPO₄,
▪ Bi₂O₃ enrobé + CoAl₂O₄, et
▪ V₂O₅ enrobé + Cr₂O₃.
▪ YCaTiVO enrobé + Co₃(PO₄)₂

Les rapports pondéraux entre les quantités respectives de pigment(s) thermochrome(s) enrobés (c'est-à-dire en fait les particules composites pigmentaires dont le coeur comprend le(s) pigment(s) thermochrome(s)) et de pigment(s) thermostable(s) sont indiqués ci-dessous, avec l'évolution de la couleur et la couleur finale :
▪ mélange de Bi₂O₃ enrobé (jaune pale à température ambiante) et de Co₃(PO₄)₂ (violet thermostable), avec un rapport pondéral de Bi₂O₃ sur Co₃(PO₄)₂ de 3:1 ; ce mélange est mauve à température ambiante, puis devient vert à 200°C ;
▪ mélange de Bi₂O₃ enrobé (jaune pale à température ambiante) et de LiCoPO₄ (violet thermostable), avec un rapport pondéral de Bi₂O₃ sur LiCoPO₄ de 1:3 ; ce mélange est violet à température ambiante, puis devient gris à 200°C ;
▪ mélange de Bi₂O₃ (jaune pale à température ambiante) et de CoAl₂O₄ (bleu thermostable), avec un rapport pondéral de Bi₂O₃ sur CoAl₂O₄ de 30 :1 ; ce mélange est bleu à température ambiante, puis devient vert à 200°C ;
▪ mélange de V₂O₅ (jaune orangé à température ambiante) et de Cr₂O₃ (vert thermostable), avec un rapport pondéral de V₂O₅ sur Cr₂O₃ de 1:1 ; ce mélange est vert à température ambiante, puis devient brun à 200°C.
▪ mélange de Y_{1,84}Ca_{0,16}Ti_{1,84}V_{0,16}O_{1,84} enrobé (jaune-orangéà température ambiante) et de Co₃(PO₄)₂ (violet thermostable), avec un rapport pondéral de Y_{1,84}Ca_{0,16}Ti_{1,84}V_{0,16}O_{1,84} sur CO₃(PO₄)₂ de 1 : 4 ; ce mélange est vert à température ambiante, puis devient gris à 200°C ;

Selon un mode de réalisation particulièrement avantageux de la présente invention, l'article chauffant peut comporter au moins deux motifs comportant chacun une composition pigmentaire, l'une au moins des compositions pigmentaires des motifs étant thermochrome. De préférence, les motifs de composition pigmentaire thermochrome identique sont disposés de telle sorte qu'il est possible de trouver au moins une coupe transversale selon laquelle ils sont disjoints. Par contre, en vue de dessus, ces motifs peuvent être reliés entre eux ou également disjoints.

Selon une première variante de ce mode de réalisation, ces motifs présentent :
▪ à température ambiante un écart colorimétrique initial perceptible à température ambiante par l'oeil humain, et
▪ à la température T₁ d'utilisation de l'article chauffant, qui est comprise entre 60°C et 350°C (et plus précisément généralement comprise entre 200°C et 300°C pour un article culinaire), une couleur finale sensiblement identique.

Par exemple, une combinaison possible est la suivante :
▪ l'un des motifs de l'article chauffant comprend le mélange de Bi₂O₃ enrobé (jaune pale à température ambiante) et de LiCoPO₄ (violet thermostable), avec un rapport pondéral de Bi₂O₃ sur LiCoPO₄ de 1:3 ; ce mélange est violet à température ambiante, puis devient gris à 200°C ;
▪ tandis que l'autre motif comprend le mélange de Y_{1,84}Ca_{0,16}Ti_{1,84}V_{0,16}O_{1,84} enrobé (jaune-orangé à température ambiante) et de Co₃(PO₄)₂ (violet thermostable), avec un rapport pondéral de Y_{1,84}Ca_{0,16}Ti_{1,84}V_{0,16}O_{1,84} sur Co₃(PO₄)₂ de 1:4 ; ce mélange est vert à température ambiante, puis devient gris à 200°C.

Selon un autre mode de réalisation de la présente invention, l'inverse peut aussi être envisagé : à température ambiante, les deux motifs présentent une couleur identique (avec par exemple l'un des motifs thermochrome et l'autre thermostable ou les deux motifs thermochromes). Lors de la montée en température de l'article, on observe l'apparition d'un écart colorimétrique entre les deux motifs (qui constitue l'indication de la montée en température).

Selon une deuxième variante de ce mode de réalisation, l'un des motifs comporte une composition pigmentaire présentant un changement de couleur réversible autour de la température d'utilisation T₁, tandis que l'autre motif comporte une composition pigmentaire présentant un changement de couleur réversible autour d'une température T₂ supérieure à la température T₁ d'utilisation d'au moins 40°C. Selon cette deuxième variante de réalisation, l'article chauffant comporte de multiples indicateurs de températures.

En effet, il est particulièrement intéressant pour un consommateur d'être averti quand un élément chauffant à atteint sa température d'utilisation optimale :
∘ pour un article culinaire la température optimale de cuisson est différente suivant les aliments (poissons, légumes, viandes rouges, viandes blanches),
∘ dans le domaine d'application des fers à repasser, cette température est différente suivant le textile à travailler.

Il est aussi utile que le consommateur soit averti quand une température maximale est atteinte. Il peut dans ce cas s'agir d'une température maximale pour la préservation de l'objet traité (nutriments dans le cas des articles culinaires, fibre textile pour les fers à repasser...) ou pour la préservation du revêtement de l'outil. L'avertissement d'un danger est aussi particulièrement utile (prévention d'un risque de brulure...).

Ainsi, dans le cas d'un article chauffant de type article culinaire de cuisson dont le décor présente deux motifs, on pourra considérer que ce dernier est doté d'au moins deux indicateurs de température se répartissant comme suit :
▪ la composition pigmentaire de l'un des motifs, qui présente un changement de couleur réversible autour de la température d'utilisation T₁, constitue un indicateur dit «basse température» ayant pour fonction d'avertir le consommateur que la surface du support destinée à être chauffée a atteint une température optimale d'utilisation, tandis que
▪ la composition pigmentaire de l'autre motif, qui présente un changement de couleur réversible autour d'une température T₂ de début de dégradation de l'article chauffant, constitue un indicateur « haute température » ayant pour fonction d'avertir l'utilisateur d'avertir d'une possible dégradation de l'objet traité (nutriments dans le cas des articles culinaires, fibre textile pour les fers à repasser...) et de la nécessité de réguler le chauffage de l'article.

En ce qui concerne la nature du support présentant la surface destinée à être chauffée, celui-ci peut être réalisé en un matériau choisi parmi les métaux, le bois, le verre, les céramiques et les matières plastiques.

On utilise de préférence dans le cadre de la présente invention des supports métalliques, et en particulier en aluminium, acier inoxydable, fonte, fer ou cuivre.

Pour une meilleure adhérence du revêtement (c'est-à-dire soit la couche de décor directement appliquée sur cette surface, soit le cas échéant, une couche de revêtement de base) sur la surface du support destinée à être chauffée, cette dernière peut être avantageusement traitée de façon à augmenter sa surface spécifique :
▪ pour de l'aluminium, ce traitement peut être fait par anodisation (création d'une structure tubulaire d'alumine), par attaque chimique, ou encore par sablage..., par apport de matière de façon continue ou discontinue selon une technique de projection à chaud (projection plasma, flamme ou arc spray),
▪ les autres substrats métalliques peuvent également être polis, sablés, brossés, ou microbillés, ou encore faire l'objet d'un apport de matière tel que décrit ci-dessus.

A titre d'exemples d'articles chauffants selon l'invention, on peut notamment citer les articles culinaires de cuisson, grilles de barbecues, équipement de cuisson électrique (crêpières, gaufriers, grills de table, raclette, fondue, cuiseurs à riz, confituriers, cuves de machines à pain...), semelles de fer à repasser, plaques de lisseurs à cheveux, ...

Les grains pigmentaires composites à structure coeur-enveloppe selon l'invention peuvent être fabriqués par un procédé comportant les étapes suivantes :
▪ une étape de fourniture d'une poudre de particules de pigment semi-conducteur thermochrome, notamment du Bi₂O₃ ;
▪ une étape d'activation au moins partielle de la surface desdites particules de pigment semi-conducteur thermochrome ;
▪ une étape de mélange d'au moins un polyalcoxylate métallique à un alcool pour initier une phase d'hydrolyse-condensation dudit précurseur de silice, qui est poursuivie sous agitation pendant quelques heures, pour aboutir à la formation des grains pigmentaires composites (43) ;
▪ une étape de filtrage pour récupérer lesdites particules (430) et les séparer des réactifs et solvants qui n'ont pas réagi ; et
▪ une étape de densification de l'enveloppe desdites particules à une température comprise entre 200°C et 600°C pendant au moins 10 minutes.

L'étape d'activation peut être soit un traitement thermique, soit un broyage, soit encore les deux à la fois (en fonction de la taille initiale de particules de pigments).

De préférence, le polyalcoxylate métallique est un TEOS et l'alcool utilisé pour l'hydrolyse-condensation est l'isopropanol.

Les différentes étapes du procédé selon l'invention sont décrites en détail dans l'exemple 2.

Les grains pigmentaires composites obtenus par le procédé selon l'invention présentent une structure coeur-enveloppe avec un coeur contenant un SC thermochrome (typiquement du Bi₂O₃) et une enveloppe de silice. Cette enveloppe est continue, étanche à l'huile, transparente, résistante thermiquement à au moins 450°C, compatible avec la formulation dans laquelle les particules seront incorporées et la granulométrie finale de la poudre permet une bonne dispersion en formulation et une bonne couverture colorimétrique du revêtement obtenu.

D'autres particularités et avantages de l'invention apparaîtront encore dans les exemples et le mode de réalisation (représenté par la figure unique 1 ci-après.

L'invention est illustrée plus en détail dans les exemples suivants. Dans les exemples, sauf indication contraire, tous les pourcentages et parties sont exprimés en poids.

### EXEMPLES

### Produits

### Pigments

**Pigments thermostables**
   ▪ Co₃(PO₄)₂ (violet à température ambiante), commercialisé par la société FERRO sous la dénomination commerciale PK5033,
**Pigment thermochrome**
   ▪ Bi₂O₃ (qui est blanc cassé, légèrement teinté de jaune à température ambiante), sous forme pulvérulente, commercialisé par la société Fluka sous la dénomination « Oxyde de bismuth (III) ».
**Enveloppe de silice**
   ▪ obtenue par voie sol-gel à partir de TEOS à titre de précurseur.

### Couches de revêtement de base et de finition

### PARTIE A

▪ silice colloïdale sous forme de solution aqueuse à 30% de silice, commercialisée par la société Clariant sous la dénomination commerciale Klebosol,
▪ isopropanol
▪ pigments noirs de grade alimentaire commercialisés par la société FERRO sous la dénomination commerciale FA1220 de Ferro.

### PARTIE B

▪ précurseur de polymérisation sol-gel : méthyltriméthoxysilane (MTMS) ou MTES;
▪ acide organique : acide acétique ;

### Couche de décor

▪ épaississant : copolymère d'acide méthacrylique et d'ester acrylique
▪ solvant : propylène glycol.

### Méthode de vérification du thermochromisme de l'article chauffant et test à l'huile

Pour évaluer de façon macroscopique la qualité de l'enveloppe des particules composites, deux types d'observations sont faites :
▪ vérification de la conservation des propriétés colorimétriques et thermochromes des particules composites : cette vérification est basée sur la comparaison à température ambiante et après un chauffage entre 100°C et 300°C de la couleur de la poudre brute (c'est-à-dire une poudre des pigments non enrobés) et de celle protégée, les différences de couleur doivent être minimes,
▪ test à l'huile de la poudre de particules composites : ce test consiste à évaluer l'efficacité de la protection apportée aux pigments bruts (c'est-à-dire non enrobés) en simulant les conditions d'usage d'un article culinaire, par une cuisson avec des graisses). Pour cela, on procède comme suit :
   ∘ la poudre est immergée dans de l'huile et chauffée à 200°C pendant 9h, ou chauffée à 270°C pendant 2h pour un test accéléré ;
   ∘ après filtration et nettoyage de cette poudre, la couleur de la poudre et son thermochromisme sont vérifiés, la variation du thermochromisme (entre une poudre protégée et une poudre non protégée) doit être minime.

### EXEMPLE 1 : Réalisation d'un article culinaire selon l'invention

On réalise un récipient de cuisson conforme à l'invention de la manière décrite ci-après, en faisant référence aux figures annexées données à titre d'exemples non limitatifs :
- la figure 1 est une vue en coupe transversale partielle d'un récipient de cuisson selon l'invention, dont la surface interne est munie d'un décor thermochrome,
- la figure 2 représente schématiquement la distribution des pigments composites et thermostables à l'intérieur du décor recouvrant la surface interne du récipient de cuisson illustré sur la figure 1,
- la figure 3 représente schématiquement un pigment composite à structure coeur-enveloppe, présent dans le décor représenté sur les figures 1 et 2.

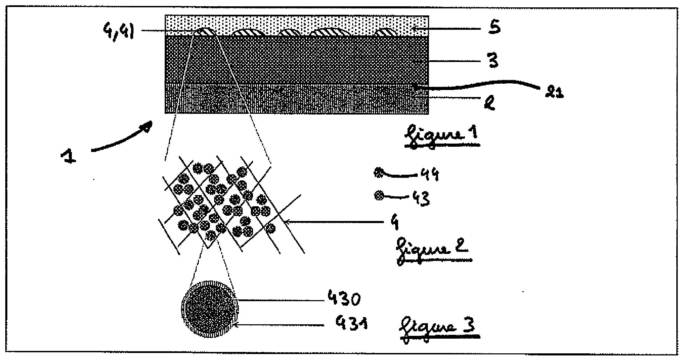

Le récipient de cuisson représenté sur la figure 1 est constitué d'une poêle 1 comportant un support 2 ayant une surface intérieure 21 destinée à être chauffée et à recevoir des aliments en vue de leur cuisson.

Cette surface intérieure 21 est recouverte par une couche continue de revêtement de base 3.

Un décor 4 discontinu comprenant une pluralité de motifs 41, 42, est appliqué sur au moins sur une partie du revêtement de base 3, qui comprend, à titre de liant thermostable résistant à au moins 200°C, un matériau sol-gel obtenu conformément au mode de réalisation décrit à l'exemple 5.

La composition du décor comprend la pâte pigmentaire de l'exemple 4, à base de pigments composites thermochromes 43 et de pigments thermostables 44.

Les pigments composites 43 sont des grains pigmentaires à structure coeur-enveloppe, comme le montre la figure 3 : le coeur 430 comprend le (ou les) SC thermochrome(s) et l'enveloppe 431 est en un matériau minéral ou hybride organo-minéral.

La répartition des pigments composites 43 thermochromes et des pigments thermostables 44 dans un motif 41 du décor 4 est illustrée par la figure 2.

Le décor 4 peut être appliqué par sérigraphie selon le procédé décrit dans le brevet français 2 576 253 ou par tampographie, ou par tout autre moyen (pulvérisation, rideau, rouleau, trempé,).

Après l'application du décor 4, on applique une couche continue et transparente de finition recouvrant entièrement le décor 4 et la couche du revêtement de base 3, conformément au procédé de réalisation décrit à l'exemple 5, celui-ci est soumis à une cuisson, qui peut être réalisée successivement après celle du revêtement de base 3. Toutefois, il est préférable que les cuissons du revêtement 3 et du décor 4 soient réalisées en une seule cuisson simultanée.

### EXEMPLE 2 : réalisation de la protection du pigment thermochrome Bi₂O₃ dans une enveloppe de silice

Après activation de la surface du pigment SC thermochrome (Bi₂O₃) et broyage pour obtenir une granulométrie satisfaisante, une coque de silice est formée par voie sol-gel à partir de précurseurs alcoxysilanes en conditions basiques. Cette coque est ensuite densifiée par traitement thermique de manière à la rendre totalement imperméables aux graisses. Le mode opératoire de synthèse de la coque est décrit ci-après.

### Activation

On procède préalablement à une activation de la surface du pigment thermochrome sous forme de poudre, par un chauffage de la poudre à 430°C.

### Broyage

Les tailles de particules composites doivent être suffisamment fines pour se disperser aisément en formulation et permettre une bonne couverture colorimétrique du revêtement obtenu.

Or, étant donné qu'à l'issue de l'encapsulation, la poudre de Bi₂O₃ enrobée ne peut plus être broyée pour ne pas risquer de casser l'enveloppe de protection juste formée, il est donc nécessaire d'obtenir, avant la synthèse de l'enveloppe, une granulométrie de poudre Bi₂O₃ adaptée. Pour cela, l'analyse granulométrique (établie avec un granulomètre à diffraction laser par exemple) de la poudre de Bi₂O₃ non enrobée et broyée doit montrer que la poudre ait un diamètre médian inférieur à 5µm.

A cet effet, on procède comme suit : la poudre préalablement activée est très rapidement introduite dans un broyeur à billes de type Discontimill avec de l'isopropanol, avec un ratio de 70g de poudre pour 30g de solvant. Le broyage dure 2h30.

### Initiation

Cette étape correspond à l'initiation de l'hydrolyse-condensation des précurseurs de silice, qui se déroule comme suit :
1. du tetraethylorthosilicate (TEOS) est d'abord ajouté, sous agitation, à la dispersion broyée de Bi₂O₃ dans de l'isopropanol ; la quantité de TEOS étant définie comme suit :
   pour 100 g de poudre de Bi₂O₃ broyée avec une aire spécifique de 0,14m²/g (ce qui correspond à des particules d'un rayon de 2,5µm), il faut ajouter 2,4 g de TEOS à la dispersion pour obtenir une enveloppe de 30 nm d'épaisseur environ ;.
2. on initie l'hydrolyse du silane, en ajoutant de l'eau, dont le pH a été ajusté à 11 par ajout d'ammoniac, lentement et sous agitation à la dispersion. L'eau est ajoutée en excès stoechiométrique raisonnable par rapport à la quantité de silane (rapport stoechiométrique R d'environ 3).

### Maturation

L'hydrolyse-condensation du TEOS est poursuivie sous agitation, à température ambiante pendant quelques heures.

### Filtration

Des particules enrobées de silice (non encore complètement densifiée) sont ensuite extraites par filtration du solvant de synthèse et des réactifs n'ayant pas réagi.

### Densification

De manière à rendre la coque de silice formée la plus étanche possible une dernière étape de densification thermique est faite.

Une densification à 500°C pendant 30 minutes permet d'obtenir une protection efficace vis-à-vis des huiles ou des graisses à température très élevée. Des durées ou des températures de densification plus faibles ne sont pas suffisantes pour réticuler et densifier efficacement le réseau de silice. Par contre, des durées ou des températures trop élevées dégradent l'efficacité de la protection.

### EXEMPLE 3 : réalisation d'une couche de revêtement de base 3 sur la surface intérieure 21 de cuisson de l'article culinaire selon l'invention de l'exemple 1.

Une composition sol-gel est préparée sous la forme d'un bi-composant comprenant une partie A et une partie B :
- la partie A comprend une dispersion de silice colloïdale, d'eau pour permettre l'hydrolyse des précurseurs métalliques de la partie B, d'isopropanol pour permettre une bonne comptabilisation des parties A et B et de pigments noir de grade alimentaire.
- la partie B comporte à titre de précurseur sol-gel du méthyltriméthoxysilane, qui permet la formation de la matrice du revêtement en ne rejetant que de l'éthanol, qui est un composé organo-volatil (COV) non toxique, contrairement au méthyltriméthoxysilane qui conduit à la formation de méthanol, qui lui est un COV toxique, ainsi qu'un acide organique permettant de catalyser la réaction sol-gel.

Ces deux parties A et B peuvent se conserver pendant plus de 6 mois sous cette forme séparée.

Avant l'application sur la surface interne de l'article culinaire tel que représenté sur la figure 1, les parties A et B sont réunies dans un mélangeur pour créer un mélange intime et permettre l'initiation de la réaction d'hydrolyse. Il est ensuite nécessaire de laisser mâturer pendant au moins 24 heures ce mélange avant l'application proprement dite, de manière à faire progresser suffisamment les réactions d'hydrolyse et de condensation. La durée de vie en pot du mélange est d'au moins 72 heures.

Puis, le mélange est filtré sur une grille en acier inoxydable ayant des orifices de 40 microns de diamètre avant d'être appliqué au pistolet pneumatique sur la surface intérieure d'une calotte préformée en aluminium, qui a été préalablement au moins dégraissée et dépoussiérée. Pour favoriser l'adhérence du revêtement, la surface interne du support a été préalablement traitée (par exemple par sablage) de façon à augmenter sa surface spécifique.

Le revêtement de base 3 est ensuite appliqué en au moins une couche d'épaisseur de 5 à 50 microns. Dans le cas d'une application en plusieurs couches, chaque couche est séchée avant l'application de la suivante.

### EXEMPLE 4 : réalisation d'une couche de décor 4 sur la couche de revêtement de base 3 réalisée à l'exemple 3.

On prépare préalablement une pâte pigmentaire en dispersant 37,5 g Bi₂O₃ enrobé et 12,5 g de Co₃(PO₄)₂) dans 50 g d'eau.

La composition de décor est composée de cette pâte pigmentaire diluée avec de l'eau et un mélange de solvants plus lourds tels que le propylène glycol, éthylène glycol pour maitriser le séchage de la formule. Cette dispersion est ensuite épaissie de manière suffisante grâce à un polyélectrolyte anionique (copolymère d'acide méthacrylique et d'ester acrylique) pour avoir une rhéologie adaptée à une application par tampographie.

La composition de décor ainsi épaissie est appliquée de manière discontinue sous forme de motifs (disjoints en coupe transversale mais pouvant être reliés entre eux en vue de dessus): en au moins une couche 4. Dans le cas d'une application en plusieurs couches, chaque couche est séchée avant l'application de la suivante.

### EXEMPLE 5 : réalisation de la couche de finition sur la couche de décor réalisée à l'exemple 3 et cuisson

Une couche de finition 5 est réalisée de la même façon que la couche de revêtement de base 3, la seule différence étant qu'elle 5 doit rester transparente et ne comprend donc pas de pigments (éventuellement des paillettes incolores).

La formulation des parties A et B, le mode opératoire et l'application sont identiques à ceux décrits dans l'exemple 3.

Les groupements méthyle de la matrice du revêtement à base de méthyltriméthoxysilane confèrent à cette couche 5 des propriétés antiadhésives. Ces propriétés peuvent être améliorées par l'ajout d'huile de silicone, comme décrit dans la demande de brevet européen EP 2 139 964).

Une fois toutes les couches appliquées et séchées, l'article 1 est cuit à 250°C pendant 15 minutes.

Bien entendu l'invention n'est pas limitée aux exemples que l'on vient de décrire (principalement des articles culinaires) et il est possible d'envisager d'autres types d'articles chauffants (par exemple des semelles de fers à repasser, plaques de grilles de barbecues etc.) sans sortir du cadre de l'invention.

## Revendications

1. Article chauffant (1) comportant un support (2) présentant une surface (21) destinée à être chauffée dans un intervalle de température T₁ d'utilisation compris entre 50°C et 400°C et un décor (4) appliqué sur au moins une partie de ladite surface (21), ledit décor (4) se présentant sous forme d'une couche de revêtement à au moins un motif (41, 42), qui comporte une composition pigmentaire thermochrome avec au moins un pigment semi-conducteur thermochrome liposensible à chaud,
**caractérisé en ce que** ladite composition pigmentaire thermochrome comprend :
∘ des grains pigmentaires composites (43) à structure coeur-enveloppe, dont le diamètre est compris entre 20 nm et 25000 nm et qui comprennent chacun :
▪ un coeur (430) comprenant ledit pigment semi-conducteur thermochrome, et
▪ une enveloppe (431) solide, transparente et continue, qui est constituée par un matériau minéral ou un matériau hybride organo-minéral, et
∘ au moins un pigment thermostable,
et ledit article (1) étant également **caractérisé en ce que** ladite composition pigmentaire thermochrome présente un changement de couleur réversible dans une zone de virage thermique d'amplitude d'au plus 40°C à l'intérieur de l'intervalle de variation de ladite température T₁ d'utilisation.

2. Article chauffant (1) selon la revendication 1, **caractérisé en ce que** ledit pigment semi-conducteur thermochrome liposensible à chaud se présente à l'état divisé sous forme de particules solides, et chaque grain pigmentaire composite (43) comprend au moins une particule de pigment.

3. Article chauffant (1) selon la revendication 1 ou 2, **caractérisé en ce que** l'enveloppe (431) des grains pigmentaires composites présente une épaisseur comprise entre 5 nm et 100 nm.

4. Article chauffant (1) selon la revendication 3, **caractérisé en ce que** l'enveloppe (431) des grains pigmentaires composites présente une épaisseur comprise entre 20 et 50 nm, et de préférence de l'ordre de 30 nm.

5. Article chauffant (1) selon l'une quelconque des revendications 1 à 4, **caractérisé en ce que** l'enveloppe (431) des grains pigmentaires composites est une enveloppe minérale constituée d'un ou plusieurs oxydes métalliques choisis parmi les oxydes des éléments suivants : Al, Si, Fe, Zr, Ce, Ti, B, Mg, Sn, Mn, Hf, Th, Nb, Ta, Zn, Mo, Ba, Sr, Ni, Sb.

6. Article chauffant (1) selon l'une quelconque des revendications 1 à 4, **caractérisé en ce que** l'enveloppe (431) des grains pigmentaires composites est une enveloppe minérale constituée d'un ou plusieurs phosphates ou pyrophosphate de Zn, Al, Mg, Ca, Bi, Fe, Cr.

7. Article chauffant (1) selon l'une quelconque des revendications 1 à 6, **caractérisé en ce que** le coeur (430) des grains pigmentaires composites (43) comprend en outre au moins un pigment thermostable, sous forme liquide ou à l'état divisé sous forme de particules solides.

8. Article chauffant (1) selon l'une quelconque des revendications 1 à 7, **caractérisé en ce que** le décor (4) comporte au moins un liant thermostable à au moins 300°C.

9. Article chauffant(1) selon la revendication 8, **caractérisé en ce que** ledit décor (4) comporte à titre de liant un matériau sol-gel comprenant une matrice d'au moins un polyalcoxylate métallique et au moins 5% en poids par rapport au poids total du revêtement d'au moins un oxyde métallique colloïdal dispersé dans ladite matrice.

10. Article chauffant selon la revendication 8, **caractérisé en ce que** le liant thermostable du décor (4) est une résine fluorocarbonée ou un mélange de résines fluorocarbonées, seul(e) ou en mélange avec d'autres résines thermostables.

11. Article chauffant selon la revendication 8, **caractérisé en ce que** le liant thermostable du décor (4) est une résine silicone ou une résine polyester silicone.

12. Article chauffant selon l'une quelconque des revendications 1 à 11, **caractérisé en ce que** la surface (2) destinée à être chauffée est recouverte au moins partiellement par un revêtement de base (3) continu ou discontinu, sur lequel est appliqué le décor (4), ledit revêtement de base (3) comprenant au moins un liant thermostable résistant à au moins 200°C.

13. Article chauffant selon l'une quelconque des revendications 1 à 12, **caractérisé en ce que** le décor (4), et la surface destinée à être chauffée (2) et/ou le revêtement de base (3) le cas échéant sont recouverts d'une couche continue de finition (5) transparente, comprenant au moins un liant thermostable résistant à au moins 200°C.

14. Article chauffant selon la revendication 13, **caractérisé en ce que** le décor (4) est exempt de liant thermostable.

15. Article chauffant selon la revendication 13 ou 14, **caractérisé en ce que** le liant thermostable du revêtement de base (3) et/ou de la couche de finition (5) sont identiques et sont constitués d'un matériau sol-gel comprenant une matrice d'au moins un polyalcoxylate métallique et au moins 5% en poids par rapport au poids total du revêtement d'au moins un oxyde métallique colloïdal dispersé dans ladite matrice.

16. Article chauffant selon l'une des revendications 9 ou 15, **caractérisé en ce que** l'enveloppe (431) des grains pigmentaires composites est une coque de silice.

17. Article chauffant selon l'une quelconque des revendications 1 à 16, **caractérisé en ce que** le pigment semi-conducteur thermochrome liposensible à chaud contenu dans le coeur (431) des grains pigmentaires composites (43) est un oxyde métallique.

18. Article chauffant selon la revendication 17, **caractérisé en ce que** le pigment semi-conducteur thermochrome liposensible à chaud est choisi parmi Bi₂O₃, Al₂O₃, V₂O₅, WO₃, CeO₂, In₂O₃, SC pyrochlore Y_{1,84}Ca_{0,16}Ti_{1,84}V_{0,16}O_{1,84}, et BiVO₄.

19. Article chauffant selon l'une quelconque des revendications 1 à 18, **caractérisé en ce que** le mélange d'un pigment thermostable et d'un pigment semi-conducteur thermochrome liposensible à chaud dans la composition pigmentaire thermochrome est choisi parmi les mélanges (Bi₂O₃ + Co₃(PO₄)₂, (Bi₂O₃ + LiCoPO₄), (Bi₂O₃ + CoAl₂O₄), (Y_{1,84}Ca_{0,16}Ti_{1,84}V_{0,16}O_{1,84} + CO₃ (PO₄)₂) et (V₂O₅ + Cr₂O₃).

20. Article chauffant selon l'une quelconque des revendications 1 à 19, **caractérisé en ce qu'**il comporte au moins deux motifs (41, 42) comportant une composition pigmentaire, l'une au moins desdites compositions pigmentaires des deux motifs (41) étant thermochrome.

21. Article chauffant selon la revendication 20, **caractérisé en ce que** lesdits motifs (41, 42) présentent :
- à température ambiante un écart colorimétrique initial perceptible à température ambiante, et
- à une température d'utilisation T₁ comprise entre 50°C et 400°C une couleur finale sensiblement identique.

22. Article chauffant selon la revendication 20, **caractérisé en ce que** lesdits motifs (41, 42) présentent à température ambiante une couleur identique, et à une température T₁ d'utilisation (4) comprise entre 50°C et 400°C un écart colorimétrique final perceptible par l'oeil humain.

23. Article chauffant selon la revendication 20, **caractérisé en ce que** l'un des motifs (41) comporte une composition pigmentaire présentant un changement de couleur réversible autour de la température T₁ d'utilisation, tandis que l'autre motif (42) comporte une composition pigmentaire présentant un changement de couleur réversible autour d'une température T₂ supérieure à la température T₁ d'utilisation d'au moins 40°C.

## Patentansprüche

1. Heizartikel (1), der einen Träger (2) umfasst, der eine Oberfläche (21) aufweist, die dazu bestimmt ist, in einem Gebrauchstemperaturbereich T₁ zwischen 50 °C und 400 °C erhitzt zu werden, und ein Dekor (4), das auf mindestens einem Teil der Oberfläche (21) aufgebracht ist, wobei das Dekor (4) die Form einer Beschichtungsschicht mit mindestens einem Muster (41, 42) aufweist, die eine thermochrome Pigmentzusammensetzung mit mindestens einem im warmen Zustand thermochromen liposensiblen Halbleiter-Pigment umfasst,
**dadurch gekennzeichnet, dass** die thermochrome Pigmentzusammensetzung Folgendes umfasst:
∘ Verbundmaterial-Pigmentkörner (43) mit Kern-Mantel-Struktur, deren Durchmesser zwischen 20 nm und 25000 nm liegt und die jeweils Folgendes umfassen:
• einen Kern (430), der das thermochrome Halbleiter-Pigment umfasst, und
• einen soliden, durchsichtigen und kontinuierlichen Mantel (431), der aus einem mineralischen Material oder einem organischmineralischen Hybridmaterial besteht, und
∘ mindestens ein thermostabiles Pigment,
Artikel (1) außerdem **dadurch gekennzeichnet, dass** die thermochrome Pigmentzusammensetzung eine umkehrbare Farbänderung in einem Farbenwandlungsbereich mit einer Amplitude von maximal 40 °C im Inneren des Variationsbereichs der Gebrauchstemperatur T₁ aufweist.

2. Heizartikel (1) nach Anspruch 1, **dadurch gekennzeichnet, dass** das im warmen Zustand liposensible thermochrome Halbleiter-Pigment im geteilten Zustand in Form von Feststoffpartikeln vorliegt, und dass jedes Verbundmaterial-Pigmentkorn (43) mindestens ein Pigmentpartikel umfasst.

3. Heizartikel (1) nach Anspruch 1 oder 2, **dadurch gekennzeichnet, dass** der Mantel (431) der Verbundmaterial-Pigmentkörner eine Stärke zwischen 5 nm und 100 nm aufweist.

4. Heizartikel (1) nach Anspruch 3, **dadurch gekennzeichnet, dass** der Mantel (431) der Verbundmaterial-Pigmentkörner eine Stärke zwischen 20 und 50 nm und bevorzugt in der Größenordnung von 30 nm umfasst.

5. Heizartikel (1) nach einem der Ansprüche 1 bis 4, **dadurch gekennzeichnet, dass** der Mantel (431) der Verbundmaterial-Pigmentkörner ein mineralischer Mantel ist, der aus einem oder mehreren Metalloxiden besteht, die aus den Oxiden der folgenden Elemente ausgewählt sind: Al, Si, Fe, Zr, Ce, Ti, B, Mg, Sn, Mn, Hf, Th, Nb, Ta, Zn, Mo, Ba, Sr, Ni, Sb.

6. Heizartikel (1) nach einem der Ansprüche 1 bis 4, **dadurch gekennzeichnet, dass** der Mantel (431) der Verbundmaterial-Pigmentkörner ein mineralischer Mantel ist, der aus einem oder mehreren Phosphaten oder Pyrophosphaten von Zn, Al, Mg, Ca, Bi, Fe, Cr besteht.

7. Heizartikel (1) nach einem der Ansprüche 1 bis 6, **dadurch gekennzeichnet, dass** der Kern (430) der Verbundmaterial-Pigmentkörner (43) außerdem mindestens ein thermostabiles Pigment in flüssiger Form oder im geteilten Zustand in Form von Feststoffpartikeln umfasst.

8. Heizartikel (1) nach einem der Ansprüche 1 bis 7, **dadurch gekennzeichnet, dass** das Dekor (4) mindestens ein Bindemittel, das bei mindestens 300 °C thermostabil ist, umfasst.

9. Heizartikel (1) nach Anspruch 8, **dadurch gekennzeichnet, dass** das Dekor (4) als Bindemittel ein Sol-Gel-Material aus mindestens einem metallischen Polyalcoxylat und mindestens 5 Gew.-% in Bezug zu dem Gesamtgewicht der Beschichtung aus mindestens einem kolloiden Metalloxid, das in der Matrix dispergiert ist, umfasst.

10. Heizartikel nach Anspruch 8, **dadurch gekennzeichnet, dass** das thermostabile Bindemittel des Dekors (4) ein Fluorkohlenstoffharz oder ein Gemisch aus Fluorkohlenstoffharzen allein oder gemischt mit anderen thermostabilen Harzen ist.

11. Heizartikel nach Anspruch 8, **dadurch gekennzeichnet, dass** das thermostabile Bindemittel des Dekors (4) ein Silikonharz oder ein Polyester-Silikonharz ist.

12. Heizartikel nach einem der Ansprüche 1 bis 11, **dadurch gekennzeichnet, dass** die Oberfläche (2), die dazu bestimmt ist, erhitzt zu werden, mindestens teilweise mit einer Basisbeschichtung (3) kontinuierlich oder diskontinuierlich bedeckt ist, auf der das Dekor (4) aufgebracht ist, wobei die Basisbeschichtung (3) mindestens ein thermostabiles Bindemittel, das mindestens 200 °C standhält, umfasst.

13. Heizartikel nach einem der Ansprüche 1 bis 12, **dadurch gekennzeichnet, dass** das Dekor (4) und die Oberfläche (2), die dazu bestimmt ist, erhitzt zu werden, und/oder die Basisbeschichtung (3) gegebenenfalls mit einer kontinuierlichen durchsichtigen Deckschicht (5) bedeckt sind, die mindestens ein thermostabiles Bindemittel, das mindestens 200 °C standhält, umfasst.

14. Heizartikel nach Anspruch 13, **dadurch gekennzeichnet, dass** das Dekor (4) kein thermostabiles Bindemittel enthält.

15. Heizartikel nach Anspruch 13 oder 14, **dadurch gekennzeichnet, dass** das thermostabile Bindemittel der Basisbeschichtung (3) und/oder der Deckschicht (5) identisch sind und aus einem Sol-Gel-Material bestehen, das eine Matrix aus mindestens einem metallischen Polyalcoxylat und mindestens 5 Gew.-% in Bezug zu dem Gesamtgewicht der Beschichtung mindestens eines kolloiden Metalloxids, das in der Matrix dispergiert ist, umfasst.

16. Heizartikel nach einem der Ansprüche 9 oder 15, **dadurch gekennzeichnet, dass** der Mantel (431) der Verbundmaterial-Pigmentkörner eine Siliziumoxidschale ist.

17. Heizartikel nach einem der Ansprüche 1 bis 16, **dadurch gekennzeichnet, dass** das im warmen Zustand liposensible thermochrome Halbleiter-Pigment, das in dem Kern (431) der Verbundmaterial-Pigmentkörner (43) enthalten ist, ein Metalloxid ist.

18. Heizartikel nach Anspruch 17, **dadurch gekennzeichnet, dass** das im warmen Zustand liposensible thermochrome Halbleiter-Pigment ausgewählt ist aus Bi₂O₃, Al₂O₃, V₂O₅, WO₃, CeO₂, In₂O₃, SC-Polychlor Y_{1,84}Ca_{0,16}Ti_{1,84}V_{0,16}O_{1,84} und BiVO₄.

19. Heizartikel nach einem der Ansprüche 1 bis 18, **dadurch gekennzeichnet, dass** das Gemisch aus einem thermostabilen Pigment und einem im warmen Zustand liposensiblen thermochromen Halbleiter-Pigment in der thermochromen Pigmentzusammensetzung aus den Gemischen (Bi₂O₃ + Co₃(PO₄)₂), (Bi₂O₃ + LiCoPO₄), (Bi₂O₃ + CoAl₂O₄), (Y_{1,84}Ca_{0,16}Ti_{1,84}V_{0,16}O_{1,84} + Co₃(PO₄)₂) und (V₂O₅ + Cr₂O₃) ausgewählt ist.

20. Heizartikel nach einem der Ansprüche 1 bis 19, **dadurch gekennzeichnet, dass** er mindestens zwei Muster (41, 42) umfasst, die eine Pigmentzusammensetzung umfassen, wobei mindestens eine der Pigmentzusammensetzungen der zwei Muster (41) thermochrom ist.

21. Heizartikel nach Anspruch 20, **dadurch gekennzeichnet, dass** die Muster (41, 42) Folgendes aufweisen:
- bei Umgebungstemperatur eine anfängliche Farbabweichung, die bei Umgebungstemperatur wahrnehmbar ist, und
- bei einer Gebrauchstemperatur T₁ zwischen 50 °C und 400 °C eine im Wesentlichen identische Endfarbe.

22. Heizartikel nach Anspruch 20, **dadurch gekennzeichnet, dass** die Muster (41, 42) bei Umgebungstemperatur eine identische Farbe aufweisen, und, bei einer Gebrauchstemperatur T₁ (4) zwischen 50 °C und 400 °C, eine Endfarbabweichung, die für das menschliche Auge wahrnehmbar ist.

23. Heizartikel nach Anspruch 20, **dadurch gekennzeichnet, dass** eines der Muster (41) eine Pigmentzusammensetzung umfasst, die um die Gebrauchstemperatur T₁ einen umkehrbaren Farbwechsel aufweist, während das andere Muster (42) eine Pigmentzusammensetzung umfasst, die um eine Temperatur T₂, die um mindestens 40 °C höher ist als die Temperatur T₁, einen umkehrbaren Farbwechsel aufweist.

## Claims

1. Heating article (1) comprising a substrate (2) presenting a surface intended to be heated in a temperature range T₁ of use of between 50°C and 400°C and a design (4) applied to at least a portion of said surface (21), in which said design (4) is in the form of a coating layer with at least one pattern (41, 42), which comprises a thermochromic pigment composition with at least one thermochromic semiconducting pigment that is lipid-sensitive under heat,
**characterized in that** said thermochromic pigment composition includes:
- composite pigment grains (43) with a core-envelope structure, the diameter of which is between 20 nm and 25000 nm and each of which include:
▪ a core (430) including said thermochromic semiconducting pigment, and
▪ a solid, transparent and continuous envelope (431), formed by a mineral or organomineral hybrid material, and
- at least one thermostable pigment,
and said article (1) is also **characterized in that** said thermochromic pigment composition shows a reversible change in colour in a thermal colour-change area with an amplitude of no more than 40°C within the range of variation of said temperature T₁ of use.

2. Heating article (1) according to claim 1, **characterized in that** said thermochromic semiconducting pigment that is lipid-sensitive under heat is in a divided state in the form of solid particles, and each composite pigment (43) includes at least one pigment particle.

3. Heating article (1) according to claim 1 or 2, **characterized in that** the envelope (431) of the composite pigment grains has a thickness of between 5 nm and 100 nm.

4. Heating article (1) according to claim 3, **characterized in that** the envelope (431) of the composite pigment grains has a thickness of between 20 and 50 nm, and preferably on the order of 30 nm.

5. Heating article (1) according to any one of claims 1 to 4, **characterized in that** the envelope (431) of the composite pigment gains is a mineral envelope consisting of one or more metal oxides chosen from the oxides of the following elements: Al, Si, Fe, Zr, Ce, Ti, B, Mg, Sn, Mn, Hf, Th, Nb, Ta, Zn, Mo, Ba, Sr, Ni, Sb.

6. Heating article (1) according to any one of claims 1 to 4, **characterized in that** the envelope (431) of the composite pigment grains is a mineral envelope consisting of one or more Zn, Al, Mg, Ca, Bi, Fe or Cr phosphates or pyrophosphates.

7. Heating article (1) according to any one of claims 1 to 6, **characterized in that** the core (430) of the composite pigment grains (43) also includes at least one thermostable pigment, in liquid form or in the divided state in the form of solid particles.

8. Heating article (1) according to any one of claims 1 to 7, **characterized in that** the design (4) comprises at least one binder that is thermostable at least at 300°C.

9. Heating article (1) according to claim 8, **characterized in that** said design (4) comprises, as a binder, a sol-gel material including a matrix of at least one metal polyalkoxylate and at least 5% by weight with respect to the total weight of the coating of at least one colloidal metal oxide dispersed in said matrix.

10. Heating article according to claim 8, **characterized in that** the thermostable binder of the design (4) is a fluorocarbon resin or a mixture of fluorocarbon resins, alone or in a mixture with other thermostable resins.

11. Heating article according to claim 8, **characterized in that** the thermostable binder of the design (4) is a silicone resin or a silicone polyester resin.

12. Heating article according to any one of claims 1 to 11, **characterized in that** the surface (2) intended to be heated is at least partially covered by a continuous or non-continuous base coating (3), on which the design is applied (4), in which said base coating (3) includes at least one thermostable binder resistant at least at 200°C.

13. Heating article according to any one of claims 1 to 12, **characterized in that** the design (4) and the surface intended to be heated (2) and/or the base coating (3) as the case may be are covered with a transparent continuous finishing layer (5) including at least one thermostable binder resistant at least at 200°C.

14. Heating article according to claim 13, **characterized in that** the design (4) does not contain a thermostable binder.

15. Heating article according to claim 13 or 14, **characterized in that** the thermostable binder of the base coating (3) and/or of the finishing layer (5) are identical and consist of a sol-gel material including a matrix of at least one metal polyalkoxylate and at least 5% by weight with respect to the total weight of the coating of at least one colloidal metal oxide dispersed in said matrix.

16. Heating article according to one of claims 9 or 15, **characterized in that** the envelope (431) of the composite pigment grains is a silica shell.

17. Heating article according to any one of claims 1 to 16, **characterized in that** the thermochromic semiconducting pigment that is lipid-sensitive under heat contained in the core (431) of the composite pigment grains (43) is a metal oxide.

18. Heating article according to claim 17, **characterized in that** the thermochromic semiconducting pigment that is lipid-sensitive under heat is chosen from Bi₂O₃, Al₂O₃, V₂O₅, WO₃, CeO₂, In₂O₃, pyrochloric SC Y_{1,84}Ca_{0,16}Ti_{1,84}V_{0,16}O_{1,84}, and BiVO₄.

19. Heating article according to any one of claims 1 to 18, **characterized in that** the mixture of a thermostable pigment and a thermochromic semiconducting pigment that is lipid-sensitive under heat is chosen from the mixtures (Bi₂O₃ + Co₃(PO₄)₂, (Bi₂O₃ + LiCoPO₄), (Bi₂O₃ + CoAl₂O₄), (Y_{1,84}Ca_{0,16}Ti_{1,84}V_{0,16}O_{1,84} + Co₃(PO₄)₂) and (V₂O₅ + Cr₂O₃).

20. Heating article according to any one of claims 1 to 19, **characterized in that** it comprises at least two patterns (41, 42) comprising a pigment composition, in which at least one of said pigment compositions of the two patterns (41) is thermochromic.

21. Heating article according to claim 20, **characterized in that** said patterns (41, 42) have:
- at room temperature, an initial colorimetric difference that is perceptible at room temperature, and
- at a temperature of use T₁ between 50°C and 400°C, a final substantially identical colour.

22. Heating article according to claim 20, **characterized in that** said patterns (41, 42) have, at room temperature, an identical colour, and at a temperature of use T₁ between 50°C and 400°C, a final colorimetric difference that is perceptible to the human eye.

23. Heating article according to claim 20, **characterized in that** one of the patterns (41) comprises a pigment composition showing a reversible change in colour around the temperature of use T₁, while the other pattern (42) comprises a pigment composition showing a reversible change in colour around a temperature T₂ greater than the temperature of use T₁ of at least 40°C.
